# EUROPEAN PATENT SPECIFICATION

(11) **EP 1 522 760 B1**
(45) Date of publication and mention of the grant of the patent: **22.03.2006**
(21) Application number: 03256299.3
(22) Date of filing: 07.10.2003
(51) Int. Cl.: F16G 13/16

(54) **Guide chain**
Führungskette
Chaîne de guidage

(43) Date of publication of application: 13.04.2005
(73) Proprietor: Yugen Kaisha Hama International, Okaya-shi Nagano 394-0034 (JP)
(72) Inventor: Hama, Tomio Yugen Kaisha Hama International, Okaya-shi Nagano 394-0034 (JP); Kasuga, Kazuhiko Kabushiki Kaisha Harmo Souken, Ina-shi Nagano 399-4501 (JP)
(74) Representative: Sutcliffe, Nicholas Robert

(56) References cited:
- EP-A- 1 030 426
- DE-A- 10 205 129

## Description

The present invention relates to a guide chain capable of guiding and protecting cables, tubes, etc..

Guide chains are used in machines having movable parts, e.g., robots, so as to prevent entanglement of cables, tubes, hoses, etc., which are connected to the movable parts.

A conventional guide chain includes a plurality of link modules made of synthetic resin, and the link modules are pivotably connected by fitting a pin into a hole of the adjacent link module. The pivot angle between adjacent link modules is limited. With this structure, the guide chain is capable of guiding cables without folding them.

In the conventional guide chain in which the link modules are connected by the pin-hole connecting mechanism, the link modules pivot on the pins when a movable part, to which the guide chain is connected, is moved. Since the link modules pivot many times, the pins and inner faces of the holes are abraded, and resin dusts formed by abrasion contaminate surroundings. If the guide chain is used in a clean room, the resin dusts badly influence products.

In the conventional guide chain in which the link modules are connected by the pin-hole connecting mechanism, the pins collide with the inner faces of the holes, so that noise is generated while the guide chain is moved. To reduce noise, link modules made of resin including reinforcing fillers or elastic resin including no reinforcing fillers were proposed. However, in the guide chains made of the elastic resin, noise can be effectively reduced, but they do not have enough toughness. Namely, the guide chains made of the elastic resin cannot be applied to machines, which move the guide chains at high speed with high load.

To solve the problems of the conventional guide chain in which the link modules are connected by the pin-hole connecting mechanism, guide chains, in which link modules can pivot without using the pin-hole connecting mechanism, were proposed (see Japanese Patent Gazettes No. 09-177902 and No. 2001-3997). In the guide chains, link modules are serially pivotably connected by elastic connecting members or elastic hinge members.

However, in the guide chains disclosed in the Japanese Patent Gazettes, additional link modules cannot be connected, so the length of the guide chains cannot be adjusted according to the type of machine. And, if one link module is broken, the guide chain must be completely exchanged. Further, the maximum turning curvature of the guide chain cannot be adjusted, and the guide chain cannot adopt opposing curvatures at different sections.

EP-A-1030426 discloses a cable chain being chain unit members with features corresponding to the pre-characterising portion of claim 1.

An object of the present invention is to provide a tough guide chain having link modules which can pivot without the use of a pin-hole connecting mechanism and which can be easily connected and disconnected.

Further optional objects are to provide a guide chain in which the maximum turning curvature can be adjusted and to provide a guide chain which can adopt opposing curvatures at different sections.

Accordingly, a first aspect of the resent invention provides a link module according to claim 1, the link module being detachably connectable to other link modules to form a guide chain.

The angle between adjacent link modules can be changed by the flexible hinge plate, so that the formation of resin dust can be prevented, and noise generation can be restricted. The guide chain can be properly applied to machines, which move the guide chain at high speed with high load. Since the main body section is made of the elastically deformable resin material, abrasion of cables, etc. can be prevented, and the formation of resin dust and noise generation can be restricted. Further, as the main body section and the joint section constitute one link module, the link modules can be easily connected and disconnected. Therefore, the guide chain can be widely used and its length readily adjusted.

The joint section may comprise a base plate and a pair of facing side plates, which may be similar or substantially identical to those of the main body section, the side plates of the joint section may be respectively fitted to the side plates of the main body section, and the base plate of the joint section may maintain the connection between the flexible hinge plate of the adjacent link module and the base plate of the main body section. With this structure, the main body section made of the elastically deformable resin material can be effectively reinforced, so that stiff link modules can be produced.

A connecting pin may be formed in the base plate of the main body section, a first connecting hole, in which the connecting pin is fitted, may be formed in the flexible hinge plate, and a second connecting hole, in which the connecting pin is fitted, may be formed in the base plate of the joint section. With this structure, the joint section effectively connects the main body section and the hinge plate of the adjacent link module.

Hooks may be respectively formed in the side plates of the main body section, and engagement holes may be respectively formed in the side plates of the joint section, wherein the hooks respectively engage with the engagement holes when the side plates of the joint section are respectively fitted to the side plates of the main body section. With this structure, the joint section can be securely fixed to the main body section.

The side plate of the main body section may have an angle limiter, which limits the pivot angle between adjacent link modules. With this structure, the maximum curvature of the guide chain can be adjusted.

A boss may be formed in one side face of each side plate of the main body section, and a recess may be formed in the other side face of each side plate of the main body section, wherein the boss and the recess respectively engage with the facing recess and the boss of the adjacent link module. With this structure, twist of the link modules can be prevented.

An intermediate plate may detachably span between the side plates of the joint section, and/or a partition may be detachably attached between the base plate of the main body section and the flap.

The joint section may be made of a relatively stiff resin material including reinforcing fillers, or the joint section may be made of a metal.

The flap may be made of an elastically deformable resin material including no reinforcing fillers. With this structure, abrasion of cables, etc. can be effectively restricted:

The flap may be made of a relatively stiff resin material including reinforcing fillers, wherein none of the reinforcing fillers project from the surface of the flap. With this structure, the guide chain has a higher stiffness, and abrasion of cables, etc. can be effectively restricted

A second aspect of the present invention provides a guide chain formed from detachably connected link modules of the previous aspect.

In the guide chain, a turning link module may be provided between two link modules, the turning link module comprising:
a pair of facing side plates, which may be similar or substantially identical to those of the main body section;
a first connecting plate spanning between facing first ends of the side plates; and
a second connecting plate spanning between facing second ends of the side plates;
wherein the first connecting plate has a connecting pin which connects with the flexible hinge plate of the first adjacent link module, and a flexible hinge plate extends from the second connecting plate, the flexible hinge plate connecting with the base plate of the second adjacent link module. With this structure, the curvature of the guide chain can be reversed at the turning link module, whereby the guide chain can adopt opposing curvatures at different sections.

Embodiments of the present invention will now be described by way of examples and with reference to the accompanying drawings, in which:
Fig. 1A is a perspective view of a link module seen from an upper side;
Fig. 1B is a perspective view of the link module seen from a lower side;
Fig. 2A is a perspective view of a joint section seen from an upper side;
Fig. 2B is a perspective view of the joint section seen from a lower side;
Fig. 3 is a perspective view of the link modules connected seen from an upper side;
Fig. 4 is a perspective view of the link modules connected seen from a lower side;
Figs. 5A-5D are explanation views showing a manner of connecting the link modules;
Fig. 6 is a perspective longitudinal sectional view of the link modules connected;
Fig. 7 is a perspective transverse sectional view of the link modules connected;
Fig. 8A is a perspective view of a flap seen from an upper side;
Fig. 8B is a perspective view of the flap seen from a lower side;
Fig. 9 is a perspective view of the link modules having partitions;
Fig. 10 is a perspective view of the link modules having intermediate plates;
Fig. 11A is a perspective view of a turning link module seen from an upper side;
Fig. 11B is a perspective view of the turning link module seen from a lower side;
Fig. 12 is a perspective sectional view of the turning link module provided between the link modules;
Fig. 13 is a perspective view of an attachment;
Fig. 14 is a perspective view of the attachments and the link modules; and
Fig. 15 is a perspective view of the attachments attached to the link modules.

Preferred embodiments of the present invention will now be described in detail with reference to the accompanying drawings.

The guide chain includes a plurality of link modules, which are serially connected. Each of the link modules includes a main body section and a joint section.

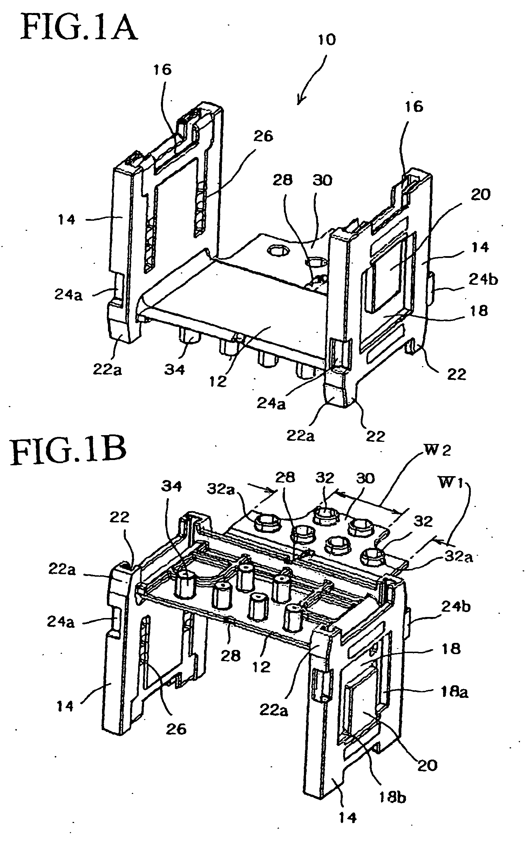

Fig. 1A is a perspective view of the main body section of the link module seen from an upper side, and Fig. 1B is a perspective view of the main body section seen from a lower side.

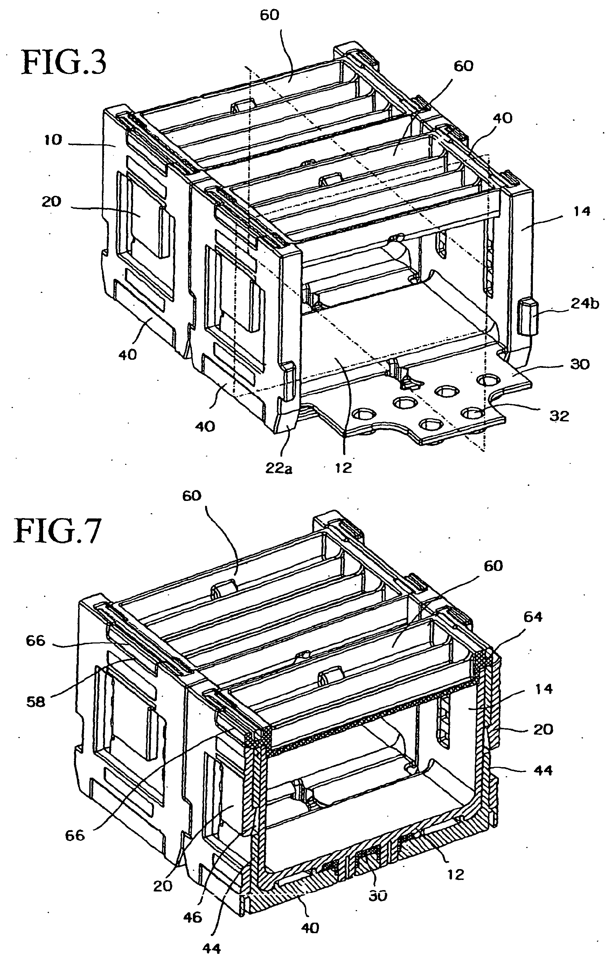

The main body section 10 includes a bottom (i.e. base) plate 12 and a pair of facing side plates 14, each of which perpendicularly extends upwardly from a side edge of the bottom plate 12. A space is formed between the side plates 14. The bottom plate 12 and the side plates 14 of the main body 10 are integrally formed by resin molding. A flap 60 will be detachably attached between upper ends of the side plates 14 (see Fig. 3). After cables, etc. are introduced through the space between the side plate 14, the flap 60 is attached.

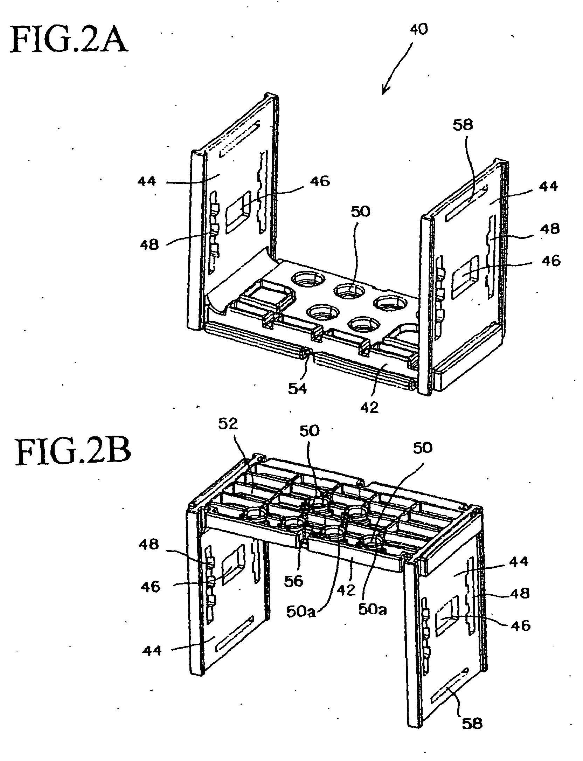

Connection grooves 16 are respectively formed in the side plates 14. The grooves 16 extend perpendicularly to the bottom plate and side plates 44 of the joint section 40 (see Figs. 2A and 2B) will be fitted into the grooves 16. Opening sections 18 are formed in outer side faces of the side plates 14, so inner faces of the grooves 16 are partially exposed from the opening sections 18. Hooks 20 extend inwardly from edges of the opening sections 18. The hooks 20 are capable of engaging with the joint section 40 so as to fix the joint section 40 to the main body section 10.

Projected sections 22 are formed at lower ends of the side plates 14, and project downwardly from four corners of the bottom plate 12. An angle limiter 22a is formed in each of the projected sections 22, and it faces the adjacent link module when the link modules are connected (see Fig. 3). The angle limiters 22a are slope faces formed in the projected sections 22. When the adjacent link module contacts the angle limiters 22a, the pivot angle between the two link modules is limited.

A recess 24a is formed in one end face of each side plate 14; a boss 24b is formed in the other end face of each side plate 14. The recesses 24a are capable of receiving the bosses 24b of the adjacent link module; the bosses 24b are capable of fitting into the recesses 24a of the adjacent link module. By fitting the bosses 24a with the recesses 24b, twist of the guide chain can be prevented.

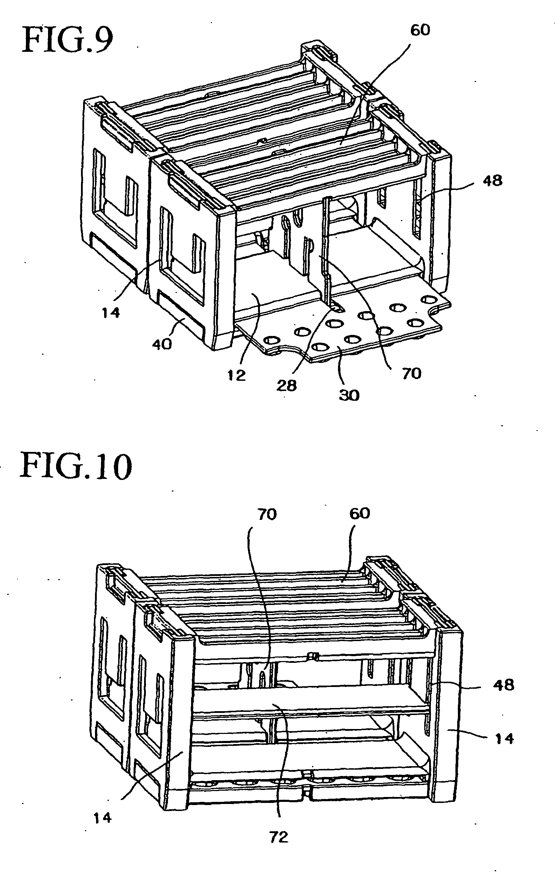

Holding grooves 26 for holding an intermediate plate 72 (see Fig. 10) are formed in inner faces of the side plates 14; holding grooves 28 for holding a partition 70 (see Fig. 9) are formed at centers of both edges of the bottom plate 12. By fitting the partition 70 in the holding grooves 28, the space between the side plates 14 is divided into two parts as shown in Fig. 9.

A flexible hinge plate 30 is integrated with the bottom plate 12 and extends from an edge thereof. The hinge plate 30 extends outwardly from the end faces of the side plates. Width "W1" of the base end of the hinge plate 30 is greater than width "W2" of the distal end thereof. Connecting holes 32 are formed in the hinge plate 30. In the bottom face of the hinge plate 30, short cylindrical sections 32a extend downwardly from the edges of the connecting holes 32.

In Fig. 1, columnar connecting pins 34 are integrated with the bottom plate 12, and they extend downwardly therefrom. The outer diameter of the connecting pin 34 is equal to the inner diameter of the connecting hole 32. The connecting pins 34 correspond to the connecting holes 32. By fitting the connecting pins 34 in the connecting holes 32 of the adjacent link module, two link modules can be connected. In the present embodiment, six connecting pins 34 are provided, but the number of the connecting pins 34 can be varied

The main body section 10 is made of an elastically deformable resin material. By employing such a resin material for the main body section 10, the connected link modules, which together form the guide chain, and which have no pin-hole connecting mechanisms, can be bent by the flexibility of the hinge plates 30 of the main body sections 10. The main body section 10 is made of a resin material having enough elasticity, e.g., polyamide, thermoplastic elastomer, thermoplastic polyurethane elastomer, vinyl chloride, polyethylene, polypropylene, etc.. Preferably the Young's modulus of the resin material of the main body section 10 is less than 2 GPa. In the present embodiment, the Young's modulus of the resin material is 0.3-0.5 GPa. Generally, the elastically deformable resin material includes no reinforcing fillers, but resin materials including reinforcing fillers and having a suitable elasticity can be employed as the elastic resin materials of the main body section 10. In the present invention, if resin materials including reinforcing fillers have a suitable elasticity, they can be considered as elastically deformable resin materials.

Fig. 2A is a perspective view of the joint section 40 of the link module seen from an upper side, and Fig. 2B is a perspective view of the joint section 40 seen from a lower side.

The joint section 40 includes a bottom (i.e. base) plate 42 and a pair of side plates 44, each of which is perpendicular to the bottom plate 42 and extend upwardly from a side edge of the bottom plate 42. The bottom plate 42 and the side plates 44 of the joint section 40 are integrally formed by resin molding. The width and thickness of the side plates 44 are such that they fit into the connection grooves 16 of the side plates 14 of the main body section 10. Engagement holes 46 are respectively formed at the centers of the side plates 44. The hooks 20 of the side plates 14 engage with the engagement holes 46 when the side plates 44 are fitted into the grooves 16 of the side plates 14. By engaging the hooks 20 with the engagement holes 46, the joint section 40 is fixed to the main body section 10. Attachment holes 48 for holding the intermediate plate 72 and brackets are formed in the side plates 44.

Holes 50 for fixing the connecting pins 34 are formed in the bottom plate 42. The holes 50 are arranged to correspond to the connecting holes 32 and the connecting pins 34. The inner diameter of the holes 50 is equal to the outer diameter of the connecting pins 34. Short cylindrical sections 50a extend from the edges of the holes 50 similarly to the short cylindrical sections 32a. A large diameter section for accommodating the short cylindrical sections 32a is formed in each of the holes 50. Ribs 52 are provided in a bottom face of the bottom plate 42 so as to reinforce the bottom plate 42. A groove 54 for removing the partition 70 and a groove 56 for fixing the partition 70 are formed In the bottom plate 44. Holes 58 for holding the flap 60 are respectively formed in the side plates 44.

In the present embodiment, the bottom plate 42 and the side plates 44 are integrally made of a resin material including reinforcing fillers which is stiffer than the elastically deformable resin material of the main body section 10. Since the joint section 40 is made of the stiff resin material including the reinforcing fillers, the main body section 10 made of the elastically deformable resin material can be reinforced, so that the link module can have enough stiffness, strength, toughness etc. for guiding and protecting cables, etc.. If resin materials including no reinforcing fillers have enough stiffness, they may be employed as the resin material for the joint section 40. Further, the joint section 40 may be made of a metal.

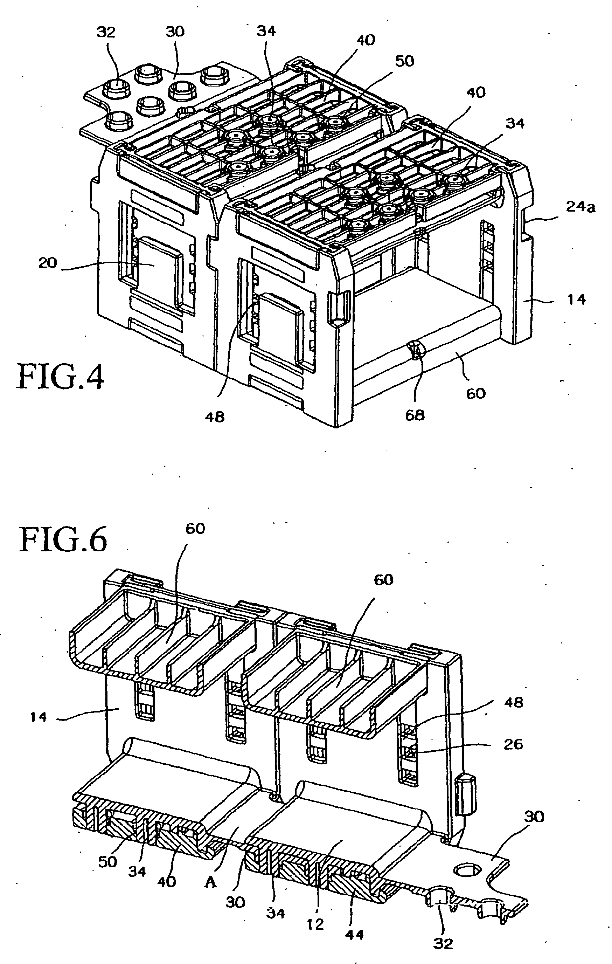

Fig. 3 is a perspective view of the link modules connected seen from an upper side, and Fig. 4 is a perspective view of the link modules connected seen from a lower side. In each of the link modules, the joint section 40 is fitted to the main body section 10. Namely, the side plates 44 of the joint section 40 are fitted in the grooves 16 of the side plates 14 of the main body section 10, and the flap 60 is detachably attached between upper ends of the side plates 14. Thus each link module comprises the main body section 10, the joint section 40 and the flap 60.

Figs. 5A-5D are explanation views showing a manner of serially connecting the link modules. Note that, the explanation views are perspective views seen from a lower side.

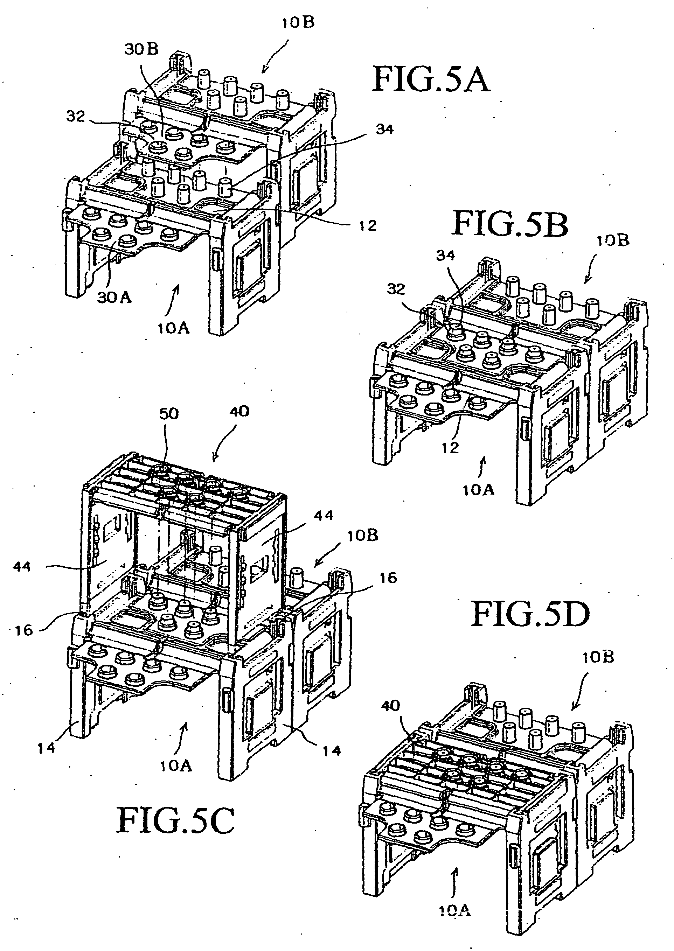

In Fig. 5A, the hinge plate 30B of the main body section 10B is placed over a bottom face of the bottom plate 12 of the main body section 10A. In Fig. 5B, the connecting pins 34 of the main body section 10A are fitted into the connecting holes 32 of the main body section 10B, so that the hinge plate 30B of the main body section 10B is connected with the bottom plate 12 of the main body section 10A.

in Fig. 5C, the joint section 40 of the main body section 10A is placed over the bottom face of the hinge plate 30B of the main body section 10B, which has been connected to the bottom plate 12 of the main body section 10A.

In Fig. 5D, the side plates 44 of the joint section 40 are respectively fitted in the grooves 16 of the side plates 14 of the main body section 10A. At that time, the connecting pins 34 of the main body section 10A and the short cylindrical sections 32a of the hinge plate 30B are fitted in the holes 50 of the joint section 40, so that the main body section 10B is connected to the main body section 10A. After the joint section 40 is attached, the flap 60 is attached to the main body section 10A. By repeating the above described steps, the link modules are serially connected (see Figs. 3 and 4).

In Figs. 3 and 4, two link modules are connected; in an actual guide chain, many link modules are serially connected.

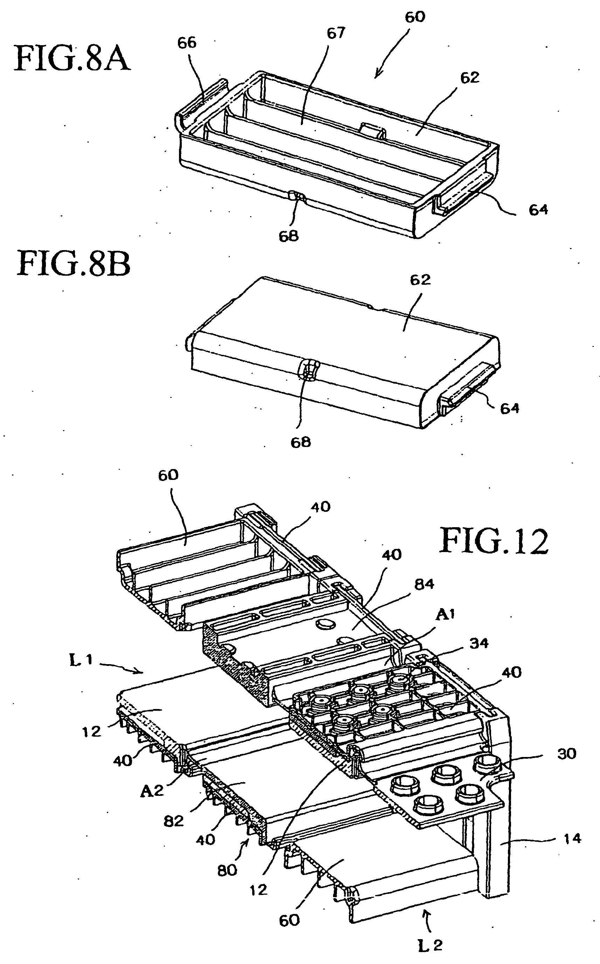

Fig. 6 is a perspective longitudinal sectional view of the link modules connected, and Fig. 7 is a perspective transverse sectional view of the link modules connected. As shown in Fig. 6, the hinge plate 30 of one link module is outwardly extended from the bottom plate 12 to the bottom face of the bottom plate 12 of the adjacent link module the connecting pins 34 are fitted in the connecting holes 32. Further, the bottom plate 42 of the joint section 40 is fitted to a bottom face of the hinge plate 30.

In Fig. 7, the side plates 44 of the joint section 40 are fitted in the grooves 16 of the side plates 14. The hooks 20 are engaged with the engagement holes 46 of the side plates 44. Further, the flap 60 is engaged with the holes 58 of the side plates 44.

As shown in Figs. 8A and 8B, the flap 60 includes a body portion 62, a first hook 64, which is provided to one end of the body portion 62, and a second hook 66, which is provided to the other end of the body portion 62. The first hook 64 is inserted into the hole 58 of one of the side plates 44; the second hook 66, whose front end is curved, is inserted into the hole 58 of the other side pate 44. After the flap 60 is attached between the side plates 44, the flap is capable of pivoting about the second hook 66, so that the flap is capable of opening and closing the space between the side plates 14. If the second hook 66 is inserted into the hole 58 of the first side plate 44 and the first hook 64 is inserted into the hole 58 of the second (other) side plate 44, the flap 60 can be pivoted in the reverse direction.

Ribs 67 for reinforcing the flap 60 and grooves 68 for engaging the partition 70 are formed in the flap 60.

The flap 60 may be made of an elastic resin material or a tough resin material. The resin material is selected according to required strength of the guide chain. If reducing abrasion of cables, etc. is required but toughness of the flap 60 is not required, the flap 60 may be made of the elastic resin material.

By employing the elastic resin material, the inner faces of the link module, which contact cables, etc., are the elastic resin material, so that abrasion of cables, etc. can be effectively restricted.

On the other hand, if reducing abrasion of cables, etc. and toughness of the flap 60 are required, the flap 60 may be made of a resin material having enough toughness or a resin material including reinforcing fillers. If a resin material including reinforcing fillers is used, preferably no reinforcing fillers project from the surface of the flap 60. If reinforcing fillers project from the surface, cables, etc. can be abraded. By selecting proper resin materials having enough toughness, the cable chain is capable of having enough toughness and preventing abrasion of cables, etc..

In the present embodiment, the width of the flap 60 is equal to that of the side plates 14. By attaching the flap 60 between the side plates 14 and the side plates 44, the link module can be formed like a box having enough toughness.

As described above, a plurality of the main body sections 10, which are made of an elastic resin material, are serially connected so as to form the guide chain. Connected parts of the adjacent main body sections 10 are reinforced by the joint section 40. Since the joint sections 40 are made of a tough resin material or a metal, the main body sections 10, which are made of the elastic resin material, can be reinforced, so that the guide chain, which has enough toughness and which is capable of preventing abrasion of cables, etc., can be produced.

As shown in Fig. 6, a part "A" of the hinge plate 30, which is located between the bottom plates 12 of the adjacent link modules, is flexible and acts as a hinge, so that the angle between the adjacent link modules can be changed.

The link modules are mutually connected without employing the pin-hole connecting mechanism, abrasion occurred between the link modules can be prevented, so that the formation of resin dust and problems caused by resin dust can be prevented. Therefore, the guide chain can be used in a clean room.

In the guide chain of the present embodiment, the hinge plate 30 is made of an elastic resin material, so the guide chain can follow a high speed bending action. Namely, the guide chain can be used in machines at high operating speeds.

The guide chain bends at hinge plates 30 only, and the guide chain has no sliding and colliding parts. Therefore, noise from the guide chain, which is generated while driving the guide chain, can be reduced.

If the side plates 14 and the angle limiters 22a of the adjacent link modules collide with each other, noise is generated. However, in the present embodiment, the main body sections 10 are made of elastic resin material, so that noise generated by collision of the side plates 14, etc. can be effectively restricted. By restricting the noise, a factory working environment and durability of the guide chain can be improved.

In the present embodiment, each of the link modules is formed from the same parts. The link module or modules can be attached to and detached from the guide chain. Therefore, the length of the guide chain can be easily adjusted according to the particular machine. Furthermore, broken link modules can be easily exchanged.

To change the limiting pivot angle between adjacent link modules, link modules whose angle limiters 22a have different angles are connected. For example, in the case of the guide chain having 10 link modules, 5 link modules may have a maximum curvature of R100 and the remaining link modules may have a maximum curvature of R200. Furthermore, the angles of the angle limiters 22a of all the link modules may be different.

By changing the limiting pivot angle between the link modules or curvature of the guide chain at a mid section, interference with other members can be prevented.

In the present embodiment, each of the link modules is formed from the same parts, so the guide chain can be used in many ways.

Fig. 9 is a perspective view of the link modules having the partitions 70 and Fig. 10 is a perspective view of the link modules having the intermediate plates 72. The inner space of each link module is divided into a plurality of portions by the partition 70 or the intermediate plate 72.

In Fig. 9, the inner space of the link module is divided into a right portion and a left portion by the partition 70. The partition 70 engages with the grooves 28 of the bottom plate 12 and the grooves 68 of the flap 60.

In Fig. 10, the intermediate plate 72 spans between the side plates 14. The intermediate plate 72 engages with the attachment holes 48 of the joint section 40. Since the intermediate plate 72 engages with the tough joint section 40, the intermediate plate 72 can be securely supported. A plurality of engagement sections are formed in each of the engagement holes 48 of the side plates 14, so the intermediate plate 72 can be selectively engaged with the engage sections. In Fig. 10, a link module including the partition 70 and a link module including the intermediate plate 72 are connected together. With this arrangement, the inner space of the guide chain is divided into four parts.

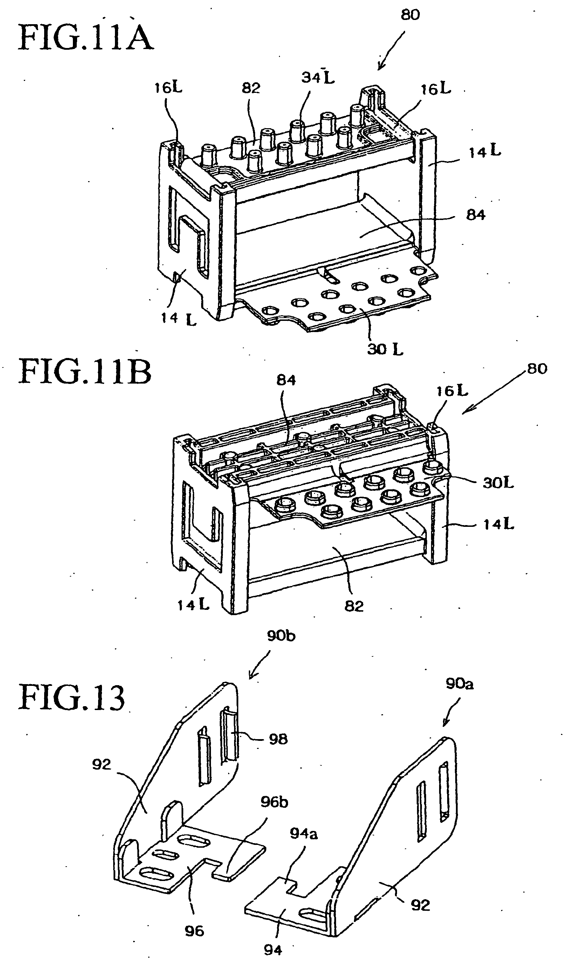

The guide chain curvature can be reversed at a mid section. Fig. 11A is a perspective view of a turning link module seen from an upper side, and Fig. 11B is a perspective view of the turning link module seen from a lower side.

In the embodiment shown in Figs. 11A and 11B, the turning link module 80 is provided between the link modules described above. The guide chain curvature can be reversed to either side of the turning link module 80.

As shown in Figs. 11A and 11B, the turning link module includes facing side plates 14L having connection grooves 16L similarly to the main body section 10. Unlike the link module described above, a first connecting plate 82 spans between upper ends of the side plates 14L, and a second connecting plate 84 spans between lower ends of the side plates 14L. No flap is provided between the side plates 14L. In the above described link module, the bottom plate 12 provides the connecting pins 34, and the hinge plate 30 extends from the bottom plate 12. On the other hand, in the turning link module 80, the first connecting plate 82 provides connecting pins 34L, and a flexible hinge plate 30L extends from the second connecting plate 84. Thus, the connecting pins. 34L are provided at an upper part of the turning link module 80; and the hinge plate 30L is provided at a lower part thereof.

Fig. 12 is a perspective sectional view of the turning link module 80 provided between the link modules L1 and L2 described above, the link module L2 being seen from a lower side and the link module L1 from an upper side.

The hinge plate 30 extends from the bottom plate 12 of the link module L1 and is connected to the face of the first connecting plate 82 in which the connecting pins 34L are formed. The side plates 44 of a joint section 40 are fitted into the grooves 16L of the turning link module 80 from the lower side of the hinge plate 30. In this way, the tuning link 80 is connected to the link module L1.

The hinge plate 30L extending from the second connecting plate 84 of the turning link module 80 is connected to the bottom plate 12 of the link module L2. The hinge plate 30L is fixed to the bottom plate 12 by a joint section 40. In this way, the tuning link 80 is connected with the link module L2.

Since the position of the connecting pins 34L is inverted with respect to that of link module L2 and the position of the hinge plate 30L of the turning link module 80 is inverted with respect to that of the link module L1, the link modules located on the rear (L1) side of the turning link module 80 are inverted with respect to those located on the forward (L2) side thereof.

Thus, the guide chain curvature can be reversed at portions A1 and A2 of the hinge plates.

The turning link module 80 can be optionally provided in the guide chain. Since any of the link modules can be substituted with the turning link module 80, the guide chain curvature can be reversed at selected positions.

Attachments to be attached to ends of the guide chain will be explained with reference to Figs. 13-15.

As shown in Fig. 13, the attachment includes two parts 90a and 90b. The parts 90a and 90b are formed into L-shapes. Namely, connecting plates 94 and 96 respectively extend inwardly from side plates 92 of the parts 90a and 90b. Hooks 94a and 94b are respectively formed at front ends of the connecting plates 94 and 96. The hooks 94a and 94b can be engaged with each other.

Claws 98 extend inwardly from inner faces of the side plates 92. The claws 98 are capable of engaging with the opening sections 18 of the side plates 14 of the main body section 10 of the link module. As shown in Fig. 1B, grooves 18b, are formed along edges of the hooks 20 in the opening sections 18. Outer faces of the side plates 44 of the joint section 40 are partially exposed in the grooves 18b. Namely, step sections are formed between the outer faces of the side plates 14 and the outer faces of the side plates 44. The claws 98 can be inserted into the grooves 18b so as to engage with attachment holes 48 of the side plates 44. By engaging with the attachment holes 48, the attachment can be attached.

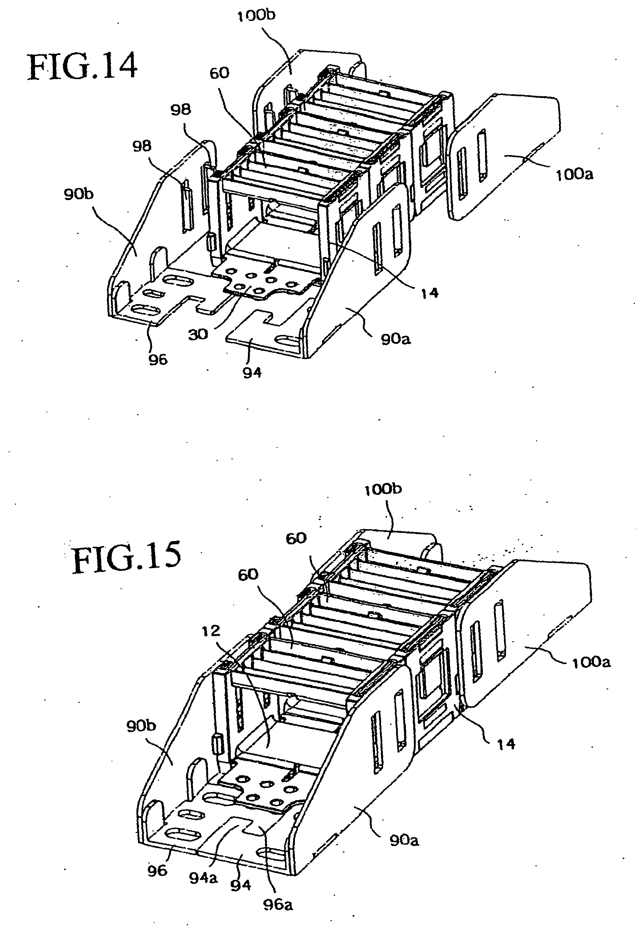

In Fig. 14, the parts 90a and 90b of the attachment are attached at one end of the guide chain, the parts 90a and 90b being provided on the both sides of the guide chain, and the claws 98 engaging with the grooves 18b of the end link module. A further attachment including parts 100a and 100b is also attached to the link module at the other end of the chain in the same manner. In the example shown in Fig. 14, the guide chain has three link modules; but in practice, the attachments may be attached to a guide chain including many link modules and having a prescribed length.

In Fig. 15, the parts 90a, 90b, 100a and 100b are completely attached to the ends of the guide chain. The hooks 94a and 96a are engaged with each other so as not to allow disconnection of the attachments. The attachment including the parts 100a and 100b will be fixed to a fixed member of a machine while the attachment including the parts 90a and 90b are free.

Conventionally, a shape of a fixed end attachment is different from that of a free end attachment. On the other hand, in the present embodiment, the shapes of the fixed end attachment and the free end attachment are the same. Therefore, the attachments can be correctly and easily attached without disarrangement. Other types of attachments are not required, so manufacturing cost of the attachments can be reduced.

## Claims

1. A link module which is detachably connectable to other link modules to form a guide chain, said link module comprising:
a main body section (10) made of resin material and including:
a base plate (12), and
a pair of facing side plates (14) extending perpendicularly from the base plate (12);
a flexible hinge plate (30) extending from an edge of the base plate (12), whereby, in the guide chain, the flexible hinge plate (30) of the adjacent link module is connected to said base plate (12) of said main body section (10); and
a flap (60) which is detachably attached to one of said side plates and, in use, opens and closes a space between said side plates (14);
**characterised in that**:
said flap (60) is detachably attached to the other of said side plates (14) so as to open and close the space between said side plates (14);
said flexible hinge plate is included in the main body section (10);
the link module further comprises a joint section (40) which, in the guide chain, maintains the connection between the flexible hinge plate (30) of the adjacent link module and said base plate (12) of said main body section (10); and
the resin material of said main body section (10) is elastically deformable, while said joint section (40) is made of a stiffer material so as to support the base plate (12) and the side plates (14) of said main body section (10).

2. The link module according to claim 1, wherein said joint section (40) comprises a base plate (42) and a pair of facing side plates (44), the side plates (44) of said joint section (40) being respectively fitted to the side plates (14) of said main body section (10), and the base plate (42) of said joint section (40) maintaining said connection between the flexible hinge plate (30) of the adjacent link module and said base plate (12) of said main body section (10).

3. The link module according to claim 2, wherein:
a connecting pin (34) is formed in the base plate (12) of said main body section (10),
a first connecting hole (32), in which the connecting pin (34) is fitted, is formed in the flexible hinge plate (30), and
a second connecting hole (50), in which the connecting pin (34) is fitted, is formed in the base plate (42) of said joint section (40).

4. The link module according to claim 2 or 3, wherein:
hooks (20) are respectively formed in the side plates (14) of said main body section (10),
engagement holes (46) are respectively formed in the side plates (44) of said joint section (40), and
the hooks (20) respectively engage with the engagement holes (46) when the side plates (44) of said joint section (40) are respectively fitted to the side plates (14) of said main body section (10).

5. The link module according to one of claims 1-4, wherein the side plate (14) of said main body section (10) has an angle limiter (22a) which, in the guide chain, limits the pivot angle between adjacent link modules.

6. The link module according to one of claims 1-5, wherein:
a boss (24b) is formed in one side face of each side plate (14) of said main body section (10),
a recess (24a) is formed in the other side face of each side plate (14) of said main body section (10), and
said boss (24b) and said recess (24a), in the guide chain, respectively engage with the recess (24a) and the boss (24b) of the adjacent link module.

7. The link module according to one of claims 2-6, wherein an intermediate plate (72) detachably spans between the side plates (44) of said joint section (40).

8. The link module according to one of claims 1-7, wherein a partition (70) is detachably attached between the base plate (12) of said main body section (10) and said flap (60).

9. The link module according to one of claims 1-8, wherein said joint section (40) is made of a relatively stiff resin material including reinforcing fillers.

10. The link module according to one of claims 1-8, wherein said joint section (40) is made of a metal.

11. The link module according to one of claims 1-9, wherein said flap (60) is made of an elastically deformable resin material including no reinforcing fillers.

12. The link module according to one of claims 1-9, wherein said flap (60) is made of a relatively stiff resin material including reinforcing fillers, and none of the reinforcing fillers project from the surface of said flap (60).

13. A guide chain formed from detachably connected link modules of any one of the previous claims.

14. The guide chain according to claim 13, wherein a turning link module (80) is provided between two link modules, said turning link module (80) comprising:
a pair of side plates (14L);
a first connecting plate (82) spanning between facing first ends of said side plates (14L);
a second connecting plate (84) spanning between facing second ends of said side plates (14L);
the first connecting plate (82) having a connecting pin (34L) which connects with the flexible hinge plate (30) of the first adjacent link module, and a flexible hinge plate (30L) extending from the second connecting plate (84) and connecting with the base plate (12) of the second adjacent link module.

## Patentansprüche

1. Gliedmodul, das lösbar mit anderen Gliedmodulen verbindbar ist, zum Bilden einer Führungskette, wobei das Gliedmodul aufweist:
einen Hauptkörperabschnitt (10), der aus Harzmaterial hergestellt ist und
eine Basisplatte (12) und ein Paar von einander zugewandten Seitenplatten (14), die sich senkrecht von der Basisplatte (12) erstrecken, enthält,
eine flexible Gelenkplatte (30), die sich von einer Kante der Basisplatte (12) erstreckt, wodurch in der Führungskette die flexible Gelenkplatte (30) des benachbarten Gliedmoduls mit der Basisplatte (12) des Hauptkörperabschnittes (10) verbunden ist;
eine Klappe (60), die lösbar an einer der Seitenplatten angebracht ist und bei der Benutzung einen Raum zwischen den Seitenplatten (14) öffnet und schließt;
**dadurch gekennzeichnet, dass**
die Klappe (60) lösbar an der anderen der Seitenplatten (14) so angebracht ist, dass sie den Raum zwischen den Seitenplatten (14) öffnet und schließt;
die flexible Gelenkplatte in dem Hauptkörperabschnitt (10) enthalten ist;
das Gliedmodul weiter einen Verbindungsabschnitt (40) aufweist, der in der Führungskette die Verbindung zwischen der flexiblen Gelenkplatte (30) des benachbarten Gliedmoduls und der Basisplatte (12) des Hauptkörperabschnittes (10) aufrecht erhält;
das Harzmaterial des Hauptkörperabschnittes (10) elastisch verformbar ist, während der Verbindungsabschnitt (40) aus einem steiferen Material hergestellt ist, so dass er die Basisplatte (12) und die Seitenplatten (14) des Hauptkörperabschnittes (10) stützt.

2. Gliedmodul nach Anspruch 1, bei dem der Verbindungsabschnitt (40) eine Basisplatte (42) und ein Paar von einander zugewandten Seitenplatten (44) aufweist, wobei die Seitenplatten (44) des Verbindungsabschnittes (40) entsprechend an die Seitenplatten (14) des Hauptkörperabschnittes (10) angepasst sind und die Basisplatte (42) des Verbindungsabschnittes (40) die Verbindung zwischen der flexiblen Gelenkplatte (30) des benachbarten Gliedmoduls und der Basisplatte (12) des Hauptkörperabschnittes (10) aufrecht erhält.

3. Gliedmodul nach Anspruch 2, bei dem
ein Verbindungsstift (34) in der Basisplatte (12) des Hauptkörperabschnittes (10) gebildet ist,
ein erstes Verbindungsloch (32), in dem der Verbindungsstift (34) eingepasst ist, in der flexiblen Gelenkplatte (30) gebildet ist, und
ein zweites Verbindungsloch (50), in dem der Verbindungsstift (34) eingepasst ist, in der Basisplatte (42) des Verbindungsabschnittes (40) gebildet ist.

4. Gliedmodul nach Anspruch 2 oder 3, bei dem
Haken (20) entsprechend in den Seitenplatten (14) des Hauptkörperabschnittes (10) gebildet sind,
Eingriffslöcher (46) entsprechend in den Seitenplatten (44) des Verbindungsabschnittes (40) gebildet sind, und
die Haken (20) entsprechend mit den Eingriffslöchern (46) in Verbindung stehen, wenn die Seitenplatten (44) des Verbindungsabschnittes (40) entsprechend an den Seitenplatten (14) des Hauptkörperabschnittes (10) angebracht werden.

5. Gliedmodul nach einem der Ansprüche 1 bis 4, bei dem Seitenplatte (14) des Hauptkörperabschnittes (10) einen Winkelbegrenzer (22a) aufweist, der in der Führungskette den Schwenkwinkel zwischen benachbarten Gliedmodulen begrenzt.

6. Gliedmodul nach einem der Ansprüche 1 bis 5, bei dem
ein Vorsprung (24b) in einer Seitenfläche einer jeden Seitenplatte (14) des Hauptkörperabschnittes (10) gebildet ist, eine Ausnehmung (24a) in der anderen Seitenfläche einer jeden Seitenplatte (14) des Hauptkörperabschnittes (10) gebildet ist und
der Vorsprung (24b) und die Ausnehmung (24a) in der Führungskette entsprechend mit der Ausnehmung (24a) und dem Vorsprung (24b) des benachbarten Gliedmoduls in Eingriff stehen.

7. Gliedmodul nach einem der Ansprüche 2 bis 6, bei dem eine mittlere Platte (72) lösbar zwischen den Seitenplatten (44) des Verbindungsabschnittes (40) überspannt.

8. Gliedmodul nach einem der Ansprüche 1 bis 7, bei dem eine Trennwand (70) lösbar zwischen der Basisplatte (12) des Hauptkörperabschnittes (10) und der Klappe (60) angebracht ist.

9. Gliedmodul nach einem der Ansprüche 1 bis 8, bei dem der Verbindungsabschnitt (40) aus einem relativ steifen Harzmaterial mit verstärkenden Füllstoffen hergestellt ist.

10. Gliedmodul nach einem der Ansprüche 1 bis 8, bei dem der Verbindungsabschnitt (40) aus einem Metall hergestellt ist.

11. Gliedmodul nach einem der Ansprüche 1 bis 9, bei dem die Klappe (60) aus einem elastisch verformbaren Harzmaterial ohne verstärkende Füllstoffe hergestellt ist.

12. Gliedmodul nach einem der Ansprüche 1 bis 9, bei dem die Klappe (60) aus einem relativ steifen Harzmaterial mit verstärkenden Füllstoffen hergestellt ist und keiner der verstärkenden Füllstoffe von der Oberfläche der Klappe (60) vorsteht.

13. Führungskette, die aus lösbar verbindenden Gliedmodulen nach einem der vorhergehenden Ansprüche gebildet ist.

14. Führungskette nach Anspruch 13, bei der ein Drehgliedmodul (80) zwischen zwei Gliedmodulen vorgesehen ist, wobei das Drehgliedmodul (80) aufweist:
ein Paar von Seitenplatten (14L);
eine erste Verbindungsplatte (82), die zwischen einander zugewandten ersten Enden der Seitenplatten (14L) überspannt;
eine zweite Verbindungsplatte (84) die zwischen einander zugewandten zweiten Enden der Seitenplatten (14L) überspannt; wobei die erste Verbindungsplatte (82) einen Verbindungsstift (84L), der die flexible Gelenkplatte (30) des ersten benachbarten Gliedmoduls verbindet, und eine flexible Gelenkplatte (30L), die sich von der zweiten Verbindungsplatte (84) erstreckt und mit der Basisplatte (12) des zweiten benachbarten Verbindungsmoduls verbunden ist, aufweist.

## Revendications

1. Module de liaison, qui peut être raccordé de façon détachable à d'autres modules de liaison pour former une chaîne de guidage, ledit module de liaison comprenant :
une section de corps principal (10) faite en un matériau de résine et comprenant :
une plaque de base (12) ; et
une paire de plaques latérales en regard l'une par rapport à l'autre (14), qui s'étendent perpendiculairement à la plaque de base (12) ;
une plaque de charnière flexible (30) qui s'étend depuis un bord de la plaque de base (12), moyennant quoi, dans la chaîne de guidage, la plaque de charnière flexible (30) du module de liaison adjacent est raccordée à ladite plaque de base (12) de ladite section de corps principal (10) ; et
un battant (60) qui est raccordé de façon détachable à l'une desdites plaques latérales et qui, à l'utilisation, ouvre et ferme un espace entre lesdites plaques latérales (14) ;
**caractérisé en ce que** :
ledit battant (60) est raccordé de façon détachable à l'autre desdites plaques latérales (14) de façon à ouvrir et à fermer l'espace entre lesdites plaques latérales (14) ;
ladite plaque de charnière flexible fait partie de la section de corps principal (10);
le module de liaison comprend en outre une section de raccordement (40) qui, dans la chaîne de guidage, maintient le raccordement entre la plaque de charnière flexible (30) du module de liaison adjacent et ladite plaque de base (12) de ladite section de corps principal (10) ; et
le matériau en résine de ladite section de corps principal (10) est déformable élastiquement, tandis que ladite section de raccordement (40) est faite en un matériau plus rigide de façon à soutenir la plaque de base (12) et les plaques latérales (14) de ladite section de corps principal (10).

2. Module de liaison selon la revendication 1, dans lequel ladite section de raccordement (40) comprend une plaque de base (42) et une paire de plaques latérales en regard l'une par rapport à l'autre (44), les plaques latérales (44) de ladite section de raccordement (40) étant raccordées respectivement aux plaques latérales (14) de ladite section de corps principal (10), et la plaque de base (42) de ladite section de raccordement (40) maintenant ledit raccordement entre la plaque de charnière flexible (30) du module de liaison adjacent et ladite plaque de base (12) de ladite section de corps principal (10).

3. Module de liaison selon la revendication 2, dans lequel :
un axe de raccordement (34) est formé dans la plaque de base (12) de ladite section de corps principal (10),
un premier trou de raccordement (32), dans lequel l'axe de raccordement (34) est installé, est formé dans la plaque de charnière flexible (30), et
un deuxième trou de raccordement (50), dans lequel l'axe de raccordement (34) est installé, est formé dans la plaque de base (42) de ladite section de raccordement (40).

4. Module de liaison selon la revendication 2 ou 3, dans lequel :
des crochets (20) sont formés respectivement dans les plaques latérales (14) de ladite section de corps principal (10),
des trous de mise en prise (46) sont formés respectivement dans les plaques latérales (44) de ladite section de raccordement (40), et
les crochets (20) se mettent en prise respectivement avec les trous de mise en prise (46) lorsque les plaques latérales (44) de ladite section de raccordement (40) sont raccordées respectivement aux plaques latérales (14) de ladite section de corps principal (10).

5. Module de liaison selon l'une quelconque des revendications 1 à 4, dans lequel la plaque latérale (14) de ladite section de corps principal (10) comporte un limiteur d'angle (22a) qui, dans la chaîne de guidage, limite l'angle de pivotement entre des modules de liaison adjacents.

6. Module de liaison selon l'une quelconque des revendications 1 à 5, dans lequel :
un bossage (24b) est formé dans l'une des faces latérales de chaque plaque latérale (14) de ladite section de corps principal (10),
un évidement (24a) est formé dans l'autre face latérale de chaque plaque latérale (14) de ladite section de corps principal (10), et
ledit bossage (24b) et ledit évidement (24a), dans la chaîne de guidage, se mettent en prise respectivement avec l'évidement (24a) et le bossage (24b) du module de liaison adjacent.

7. Module de liaison selon l'une quelconque des revendications 2 à 6, dans lequel une plaque intermédiaire (72) s'étend de façon détachable entre les plaques latérales (44) de ladite section de raccordement (40).

8. Module de liaison selon l'une quelconque des revendications 1 à 7, dans lequel une cloison de séparation (70) est raccordée de façon détachable entre la plaque de base (12) de ladite section de corps principal (10) et ledit battant (60).

9. Module de liaison selon l'une quelconque des revendications 1 à 8, dans lequel ladite section de raccordement (40) est faite en un matériau en résine relativement rigide contenant des charges renforçantes.

10. Module de liaison selon l'une quelconque des revendications 1 à 8, dans lequel ladite section de raccordement (40) est faite en métal.

11. Module de liaison selon l'une quelconque des revendications 1 à 9, dans lequel ledit battant (60) est fait en un matériau en résine déformable élastiquement ne contenant pas de charges renforçantes.

12. Module de liaison selon l'une quelconque des revendications 1 à 9, dans lequel ledit battant (60) est fait en un matériau en résine relativement rigide contenant des charges renforçantes, et aucune des charges renforçantes ne fait saillie à partir de la surface dudit battant (60).

13. Chaîne de guidage constituée de modules de liaison raccordés de façon détachable, selon l'une quelconque des revendications précédentes.

14. Chaîne de guidage selon la revendication 13, dans laquelle un module de liaison tournant (80) est prévu entre deux modules de liaison, ledit module de liaison tournant (80) comprenant :
une paire de plaques latérales (14L) ;
une première plaque de raccordement (82) s'étendant entre des premières extrémités en regard l'une par rapport à l'autre desdites plaques latérales (14L) ;
une deuxième plaque de raccordement (84) s'étendant entre des deuxièmes extrémités en regard l'une par rapport à l'autre desdites plaques latérales (14L) ;
la première plaque de raccordement (82) comportant un axe de raccordement (34L) qui se met en prise avec la plaque de charnière flexible (30) du premier module de liaison adjacent, et une plaque de charnière flexible (30L) qui s'étend à partir de la deuxième plaque de raccordement (84) et se met en prise avec la plaque de base (12) du deuxième module de liaison adjacent.
